# FASCICULE DE BREVET EUROPEEN

(11) **EP 2 265 559 B1**
(45) Date de publication et mention de la délivrance du brevet: **14.06.2017**
(21) Numéro de dépôt: 09745930.9
(22) Date de dépôt: 14.04.2009
(51) Int. Cl.: C04B 35/482, C03B 5/43, C04B 35/48, F27D 1/00

(54) **PRODUIT FRITTÉ ÉLABORÉ À PARTIR D'UNE CHARGE À BASE DE ZIRCON**
AUS EINER LADUNG AUF ZIRKONBASIS HERGESTELLTES GESINTERTES PRODUKT
SINTERED PRODUCT PRODUCED FROM A ZIRCON-BASED CHARGE

(30) Priorité: 15.04.2008 FR 0852534
(43) Date de publication de la demande: 29.12.2010
(73) Titulaire: Saint-Gobain Centre de Recherches et d'Etudes Européen, 92400 Courbevoie (FR)
(72) Inventeur: CITTI, Olivier, Wellesley Massachusetts 02482 (US); FOURCADE, Julien, Shrewsbury Massachusetts 04545 (US)
(74) Mandataire: Nony
(86) Numéro de dépôt international: PCT/FR2009/050686
(87) Numéro de publication internationale: WO 2009/138611

(56) Documents cités:
- WO-A-2006/108945
- WO-A2-2008/047298
- FR-A- 2 907 116
- US-A- 2 220 412
- US-A- 5 407 873
- DATABASE WPI Week 198413 Thomson Scientific, London, GB; AN 1984-080127 XP002508214 & SU 1 020 404 A1 (PAVLOVSKII V K) 30 mai 1983 (1983-05-30)

## Description

### Domaine technique

L'invention concerne de nouveaux matériaux frittés produits à partir de zircon, un procédé pour leur fabrication et leur utilisation en four de verrerie.

### Arrière-plan technologique

Parmi les produits réfractaires, on distingue les produits fondus et coulés et les produits frittés.

A la différence des produits frittés, les produits fondus et coulés comportent le plus souvent une phase vitreuse intergranulaire très abondante qui vient remplir le réseau des grains cristallisés. Les problèmes rencontrés dans leurs applications respectives par les produits frittés et par les produits fondus et coulés, et les solutions techniques adoptées pour les résoudre, sont donc généralement différents. Par ailleurs, du fait des différences importantes entre les procédés de fabrication, une composition mise au point pour fabriquer un produit fondu et coulé n'est pas *a priori* utilisable telle quelle pour fabriquer un produit fritté et réciproquement.

Les produits frittés sont obtenus par mélange de matières premières appropriées puis mise en forme à cru de ce mélange et cuisson de la forme crue résultante à une température et pendant un temps suffisants pour obtenir le frittage de cette forme crue.

Les produits frittés, selon leur composition chimique et leur mode de préparation, sont destinés à des industries très variées.

Un produit fritté adapté à une application particulière ne possédera donc pas *a priori* les propriétés nécessaires pour être utilisé dans une autre application où les conditions de température, de corrosion ou d'abrasion sont différentes.

Par exemple US 3,899,341 décrit des produits frittés élaborés à partir de zircon (50-90%) et de zircone. La zircone est partiellement stabilisée afin de limiter les déformations élastiques des produits, qui conduisent à des fissurations. Les produits de US 3,899,341 sont cependant conçus pour être utilisés en contact avec de l'acier fondu. Ils ne sont donc pas, *a priori,* aptes à être utilisés en contact avec un verre fondu.

Parmi les produits frittés, les produits denses élaborés à partir de zircon (silicate de zirconium : ZrO₂.SiO₂, ou ZrSiO₄) et éventuellement de zircone (oxyde de zirconium ZrO₂ libre) peuvent être utilisés dans des applications où ils sont directement au contact de verre fondu, en particulier dans le cas des verres non alcalins.

EP 952 125 décrit ainsi des produits frittés destinés à des fours de verrerie et élaborés à partir de zircon (5-40%) et de zircone. Ces produits contiennent en outre des oxydes de titane, d'aluminium et d'yttrium permettant l'élaboration de gros blocs sans fissures. La teneur de ces produits en SiO₂ est inférieure à 14%. Leur teneur en ZrO₂ est supérieure à 82%.

WO 02/44102 décrit des « isopipes » utilisés pour la fabrication de feuilles de verre. Les isopipes comportent plus de 95% en masse de zircon et présentent un comportement au fluage insuffisant, à moins de comporter également entre 0,2 et 0,4% d'oxyde de titane. Pour illustrer l'état de la technique, WO 02/44102 cite US 5,124,287.

US 5,124,287 décrit des compositions contenant de 75 à 95% de zircon et de l'oxyde de titane, destinées à être en contact avec du verre fondu. Il indique que la présence d'oxyde de titane est favorable à la densification des produits obtenus après frittage. Dans le produit final, la zircone doit être non stabilisée et il est donc préférable d'utiliser de la zircone non stabilisée dans le mélange de départ. L'utilisation de zircone stabilisée, par exemple avec des stabilisants de la zircone tels que les oxydes d'yttrium ou de calcium, n'est cependant pas rédhibitoire, le chauffage du mélange conduisant à déstabiliser la zircone.

WO 2006/073841 décrit des matériaux réfractaires destinés à l'industrie verrière. Ces matériaux, à base de zircon, peuvent comporter Y₂O₃. Ils comportent toujours au moins 1% de P₂O₅ ou de V₂O₅.

SU 1 020 404 décrit un mélange destiné au revêtement de produits réfractaires à base de zircon.

L'apparition de nouveaux verres, tels que les verres sans alcalins, entraîne une augmentation des températures de fusion et/ou de formage du verre. Par conséquent, les matériaux traditionnels à base de zircon voient leurs performances diminuer. En effet, les matériaux traditionnels à base de zircon ont tendance à exsuder lorsqu'ils sont soumis à des températures supérieures à 1550°C. L'exsudation est d'autant plus importante que la température et le temps d'exposition à ces températures augmentent. Ce phénomène est particulièrement dommageable puisqu'il peut ensuite s'accompagner de formation de défauts dans le verre, d'une corrosion par le verre accrue et de phénomènes de bullage.

Il existe donc un besoin pour un produit présentant une très bonne résistance à l'exsudation et pouvant être utilisé dans les fours de verrerie. La présente invention vise à satisfaire ce besoin.

### Résumé de l'invention

A cet effet, l'invention propose un produit fritté élaboré à partir d'une charge de départ contenant 75 à 99% de zircon, en pourcentages massiques sur la base de la charge de départ, et présentant la composition chimique pondérale moyenne, en pourcentages massiques sur la base des oxydes, suivante :
60% ≤ ZrO₂ ≤ 72,8%,
27% ≤ SiO₂ ≤ 36%,
0,1% ≤ B₂O₃ + GeO₂ + P₂O₅ + Sb₂O₃ + Nb₂O₅ + Ta₂O₅ + V₂O₅,
0,1% ≤ ZnO + PbO + CdO,
avec ZnO < 2,5%
B₂O₃ + GeO₂ + P₂O₅ + Sb₂O₃ + Nb₂O₅ + Ta₂O₅ + V₂O₅+ ZnO + PbO + CdO ≤ 5%, 0% ≤ Al₂O₃ + TiO₂ + MgO + Fe₂O₃ + NiO + MnO₂ + CoO + CuO ≤ 5%,
Autres oxydes : ≤ 1,5%,
pour un total de 100%.

Ce produit réfractaire fritté présente une excellente résistance à l'exsudation, en particulier par rapport aux produits décrits jusqu'à ce jour. Avantageusement, il présente également une densité élevée, équivalente ou supérieure aux produits connus testés.

De préférence, le produit selon l'invention présente encore une ou plusieurs des caractéristiques optionnelles suivantes :
- La teneur en Ta₂O₅ est supérieure à 0,3%, de préférence supérieure à 0,5%, de préférence encore supérieure à 0,8%, en pourcentages en masse sur la base des oxydes.
- La teneur en Ta₂O₅ est inférieure à 3%, de préférence inférieure à 2,5%, de préférence encore à inférieure 2%, en pourcentages en masse sur la base des oxydes.
- 0,1% ≤ GeO₂ + P₂O₅ + Nb₂O₅ + Ta₂O₅, et/ou
   0,1% ≤ ZnO, et/ou
   GeO₂ + P₂O₅ + Nb₂O₅ + Ta₂O₅ + ZnO ≤ 5%, et/ou
   0% ≤ Al₂O₃ + TiO₂ + MgO + Fe₂O₃ + NiO + MnO₂ + CoO + CuO ≤ 5%,
   en pourcentage en masse sur la base des oxydes.
- La teneur en ZnO est supérieure à 0,3%, de préférence supérieure à 0,5%, de préférence encore supérieure à 0,8%, en pourcentages en masse sur la base des oxydes.
- La teneur en ZnO est inférieure à 2,5%, de préférence encore inférieure à 2%, en pourcentages en masse sur la base des oxydes.
- Le produit selon l'invention comporte au moins un oxyde, et de préférence au moins deux oxydes, parmi Al₂O₃, TiO₂, MgO, Fe₂O₃, NiO, MnO₂, CoO et CuO. De préférence la teneur d'au moins un de ces oxydes, voire de chacun d'au moins deux de ces oxydes, est supérieure à 0,05%, de préférence supérieure à 0,10%, de préférence encore supérieure à 0,15%, de préférence toujours, supérieure à 0,3%, en pourcentages en masse sur la base des oxydes. De préférence, 0,05% < Al₂O₃ + TiO₂, de préférence 0,9% < Al₂O₃ + TiO₂, de préférence encore 1% < Al₂O₃ + TiO₂. Toujours de préférence, Al₂O₃ + TiO₂ < 3%, de préférence Al₂O₃ + TiO₂ < 2%, en pourcentages en masse sur la base des oxydes.
- Le produit présente la composition chimique pondérale moyenne, en pourcentages massiques sur la base des oxydes, suivante :
   60% ≤ ZrO₂ ≤ 72,4%,
   27% ≤ SiO₂ ≤ 36%,
   0,2% ≤ B₂O₃ + Nb₂O₅ + Ta₂O₅ ≤ 2,5%,
   0,2% ≤ ZnO ≤ 2,5%,
   0,2% ≤ Al₂O₃ + TiO₂ + MgO + NiO + MnO₂ + CoO + CuO ≤ 3%,
   Autres oxydes : ≤ 1,5%,
   pour un total de 100%.
- Le produit présente la composition chimique pondérale moyenne, en pourcentages massiques sur la base des oxydes, suivante :
   60% ≤ ZrO₂ ≤ 72,4%,
   27% ≤ SiO₂ ≤ 36%,
   0,2% ≤ Nb₂O₅ + Ta₂O₅ ≤ 2,5%,
   0,2% ≤ ZnO ≤ 2,5%,
   0,2% ≤ Al₂O₃ + TiO₂ ≤ 2%,
   Autres oxydes : ≤ 1,5%,
   pour un total de 100%.
- Les « autres oxydes » sont des impuretés. De préférence, la teneur en « autres oxydes » est inférieure à 1,2%, de préférence inférieure à 1%, de préférence encore inférieure à 0,7%, de préférence inférieure à 0,5%, et de préférence toujours, inférieure à 0,2%, en pourcentages en masse sur la base des oxydes.
- La teneur en P₂O₅ est inférieure à 1%, de préférence inférieure à 0,8%, de préférence inférieure à 0,5%.
- La teneur en oxyde d'yttrium Y₂O₃ est inférieure à 0,5%, de préférence inférieure à 0,3%, en pourcentages en masse sur la base des oxydes.
- La teneur en zircon dans la charge de départ est supérieure ou égale à 80%, en pourcentage en masse sur la base de la charge de départ.
- La teneur en zircone dans le produit est supérieure à 5%, de préférence à 10%, et/ou inférieure à 15%, en pourcentages massiques sur la base des oxydes.
- Pour plus de 90% en nombre, voire sensiblement 100% en nombre des grains, la taille des grains est inférieure à 50 microns, de préférence inférieure à 30 microns, de préférence inférieure à 20 microns, de préférence encore inférieure à 10 microns.
- La porosité apparente du produit est inférieure à 5%, de préférence inférieure à 2%, de préférence inférieure à 1%, de préférence inférieure à 0,5%.
- Le produit présente une densité apparente supérieure à 4,0 g/cm³, de préférence supérieure à 4,1 g/cm³, de préférence supérieure à 4,2 g/cm³.
- Le produit se présente sous la forme d'un bloc, présentant de préférence une masse supérieure à 5 Kg, de préférence supérieure à 10 Kg.
Un procédé de fabrication d'un produit fritté comportant les étapes suivantes est mentionné :
a) mélange de matières premières pour former une charge de départ,
b) mise en forme d'une pièce crue à partir de ladite charge de départ,
c) frittage de ladite pièce crue de manière à obtenir ledit produit fritté, remarquable en ce que la charge de départ est déterminée de manière que ledit produit soit conforme à l'invention.

De préférence, le procédé peut présenter encore une ou plusieurs des caractéristiques optionnelles suivantes :
- A l'étape a), on ajoute du zircon et éventuellement de la zircone en des quantités telles que le total des teneurs en zircon et en zircone représente au moins 95% de la charge de départ, en pourcentage en masse sur la base de la charge de départ.
- On ajoute volontairement (c'est-à-dire systématiquement et méthodiquement) à l'étape a) un ou plusieurs des oxydes Al₂O, TiO₂, MgO, Fe₂O₃, NiO, MnO₂, CoO, CuO, B₂O₃, GeO₂, P₂O₅, Sb₂O₃, Nb₂O₅, Ta₂O₅, V₂O₅, PbO, ZnO et CdO, dans des quantités garantissant que le produit fritté obtenu à l'étape c) est conforme à l'invention.
- Au moins 50%, de préférence au moins 80%, de préférence au moins 90%, de préférence encore sensiblement 100%, en masse du zinc est ajouté sous forme oxyde ZnO.
- La teneur en acide phosphorique est inférieure à 1%, de préférence inférieure à 0,8%, de préférence encore inférieure à 0,5 %.
- Les matières premières utilisées à l'étape a) présentent une taille médiane (D₅₀) inférieure à 50µm, voire inférieure à 40µm, voire inférieure à 20µm, voire inférieure à 5µm, voire inférieure à 4µm.

L'invention concerne aussi l'utilisation d'un produit réfractaire selon l'invention, fabriqué ou susceptible d'avoir été fabriqué suivant un procédé selon l'invention, dans un four de verrerie, en particulier dans des zones du four en contact avec du verre fondu.

### Définitions

Dans la présente description et conformément à l'usage, on appelle, dans la charge de départ ou dans le produit, « zircone » les molécules de ZrO₂ qui ne sont pas associées à des molécules de SiO₂ pour former du zircon. De même, on appelle « silice » les molécules de SiO₂ qui ne sont pas associées à des molécules de ZrO₂ pour former du zircon. La teneur en ZrO₂ du produit selon l'invention correspond à la teneur en ZrO₂ du zircon et à la zircone. La teneur en SiO₂ du produit selon l'invention correspond à la teneur en SiO₂ du zircon et à la silice.

Dans une composition chimique, les teneurs en oxydes se rapportent aux teneurs globales pour chacun des éléments chimiques correspondants, exprimées sous la forme de l'oxyde le plus stable, selon la convention habituelle de l'industrie ; sont donc inclus les sous-oxydes et éventuellement nitrures, oxynitrures, carbures, oxycarbures, carbonitrures, ou même les espèces métalliques des éléments susmentionnés.

Dans les sommes de teneurs massiques des oxydes Al₂O₃, TiO₂, MgO, Fe₂O₃, NiO, MnO₂, CoO, CuO, B₂O₃, GeO₂, P₂O₅, Sb₂O₃, Nb₂O₅, Ta₂O₅, V₂O₅, PbO, ZnO et CdO, utilisées pour définir la composition chimique de produit, un ou plusieurs des oxydes mentionnés peut être absent.

Les matières premières contenant de l'oxyde de zirconium ZrO₂ contiennent également de petites quantités de HfO₂ (1,5% à 2%). « ZrO₂ » désigne classiquement l'oxyde de zirconium ZrO₂ et ces traces de HfO₂ introduites avec ZrO₂.

Sauf mention contraire, tous les pourcentages sont des pourcentages massiques sur la base des oxydes. En particulier, dans la charge de départ, le pourcentage de zircon est exprimé sur la base de la masse totale de la charge de départ.

Par « impuretés », on entend les constituants inévitables, introduits nécessairement avec les matières premières ou résultant de réactions avec ces constituants. Dans un mode de réalisation particulier, P₂O₅ est une impureté.

La « taille médiane » D₅₀ d'un ensemble de particules est la taille divisant les particules de cet ensemble en première et deuxième populations égales en masse, ces première et deuxième populations ne comportant que des particules présentant une taille supérieure, ou inférieure respectivement, à la taille médiane.

La taille d'un grain est la plus grande dimension observée dans un plan de coupe polie.

### Description détaillée d'un mode de réalisation

Le zircon peut être apporté par du sable de zircon ou bien de la chamotte de produits denses à forte teneur en zircon.

Selon l'invention, il est indispensable que la charge de départ comporte au moins 75%, de préférence au moins 80% de zircon. Les propriétés avantageuses du produit selon l'invention ne seraient en effet pas obtenues si les quantités de SiO₂ et ZrO₂ apportées par le zircon selon l'invention étaient apportées sous forme de silice et de zircone.

De préférence, le total des teneurs en zircon et en zircone représente au moins 95% de la charge de départ.

La zircone présente des variations dilatométriques importantes dues à son changement d'état cristallographique à haute température. Pour limiter ces variations dilatométriques, en particulier sur les gros blocs, il est nécessaire de limiter la teneur en zircone. La charge de départ doit donc contenir moins de 25% de zircone, ce qui est assuré avec une teneur en zircon d'au moins 75%.

Selon l'invention, la présence d'au moins un oxyde choisi parmi B₂O₃, GeO₂, P₂O₅, Sb₂O₃, Nb₂O₅, Ta₂O₅, ou V₂O₅, en particulier de Ta₂O₅ et Nb₂O₅, et, en particulier encore de Ta₂O₅, et simultanément d'au moins un oxyde choisi parmi ZnO, PbO, et CdO, en particulier de ZnO, améliore la résistance à l'exsudation du produit réfractaire à base de zircon.

Les ajouts d'au moins un oxyde choisi parmi Al₂O₃, TiO₂, MgO, Fe₂O₃, NiO, MnO₂, CoO, CuO permettent, si nécessaire, d'améliorer la densité des produits selon l'invention. Ces ajouts sont donc particulièrement avantageux dans les applications où le produit est placé dans un environnement corrosif, et notamment en contact avec du verre en fusion. Les inventeurs ont découvert que, dans les produits de l'invention, et en particulier dans les produits comportant Ta₂O₅, une densité élevée peut cependant être obtenue lorsque ces ajouts, en particulier de Al₂O₃ et de TiO₂, sont limités à des teneurs faibles, en particulier inférieures à 3%, inférieures à 2%, voire inférieures à 1%, ou même inférieures à 0,5%, en pourcentages massiques sur le base des oxydes.

De préférence, on ajoute au moins 1% de silice à la charge de départ de manière à favoriser le démarrage de la densification à des températures plus faibles que celles nécessaires à la densification du zircon pur.

Les « autres oxydes » sont des oxydes tels que Na₂O ou Y₂O₃. La teneur en Na₂O (qui favorise la dissociation du zircon) doit être minimisée. De préférence, ces oxydes sont des impuretés apportées par les matières premières, et qui ne sont pas des constituants nécessaires, mais seulement tolérés. A des teneurs inférieures à 1,5%, on considère que l'effet de ces « autres oxydes » ne modifie pas substantiellement le résultat obtenu.

De préférence, la teneur de chacun des oxydes Na₂O et Y₂O₃ dans le produit fritté selon l'invention est inférieure à 0,5%, de préférence inférieure à 0,3%, de préférence encore inférieure à 0,15% en pourcentages massiques sur la base des oxydes.

Des blocs réfractaires frittés peuvent être fabriqués selon un procédé comportant classiquement les étapes a) à c). Optionnellement, ce procédé comporte, préalablement à l'étape a), une étape de broyage des sources de zircon et autres matières premières. Cette étape permet d'atteindre les caractéristiques granulométriques classiques nécessaires à la bonne densification ultérieure du matériau. En particulier, les poudres ainsi préparées peuvent présenter une taille médiane (D₅₀) inférieure à 50µm, voire inférieure à 40µm, voire inférieure à 20µm, voire inférieure à 5µm, voire inférieure à 4µm.

A l'étape a), toutes les matières premières sont dosées pour que le mélange ait la composition chimique pondérale moyenne désirée, puis mélangées en présence de défloculant(s) et/ou liant(s) utilisés classiquement dans les procédés de frittage du zircon, par exemple de l'acide phosphorique.

Le mélange des matières premières peut éventuellement être atomisé avant de passer à l'étape b).

A l'étape b), le mélange est ensuite mis en forme, par exemple par pressage isostatique, afin de former des blocs de taille désirée.

D'autres techniques telles que le coulage en barbotine, le pressage uniaxial, le coulage d'un gel, le vibro-coulage ou une combinaison de ces techniques pourraient être utilisées.

A l'étape c), la pièce crue est frittée sous air, à pression atmosphérique et à une température comprise entre 1400°C et 1700°C, de manière à former un bloc réfractaire dense.

Bien entendu, la présente invention n'est pas limitée aux modes de réalisation décrits fournis à titre d'exemples illustratifs et non limitatifs.

### Exemples

Les exemples non limitatifs suivants sont donnés dans le but d'illustrer l'invention.

Dans ces exemples, les matières premières employées suivantes ont été choisies, les pourcentages donnés étant des pourcentages massiques :
- Un zircon micronisé présentant l'analyse chimique moyenne suivante (en poids) : ZrO₂+HfO₂: 66%, SiO₂: 33%, Al₂O₃: 0,3%, P₂O₅: 0,3%, Fe₂O₃: 0,07%, TiO₂: 0,08%, et moins de 0,2 % d'autres composés tels que Y₂O₃. Les particules ont une taille médiane (D₅₀) de 2,5 µm.
- Une solution d'acide phosphorique à 80%.
- De l'oxyde de zinc contenant plus de 99% de ZnO, dont la taille médiane (D₅₀) des particules est d'environ 3µm.
- De l'oxyde de titane contenant environ 95% de TiO₂ et dont la taille médiane des particules est de 2,3 µm.
- De l'alumine dont la taille médiane des particules est de 3 µm environ.
- De l'oxyde de germanium contenant environ 99% de GeO₂ et dont la taille médiane des particules est d'environ 3 µm.
- De l'oxyde de tantale contenant environ 99,85% de Ta₂O₅ et dont la taille des particules est inférieure 44 µm.

Des blocs réfractaires frittés ont été fabriqués selon un procédé comportant classiquement les étapes suivantes :
a) mélange des matières premières pour former la charge de départ,
b) mise en forme d'une pièce crue à partir dudit mélange,
c) frittage de ladite pièce crue.

A l'étape a), toutes les matières premières ont été dosées pour que le mélange ait la composition chimique pondérale moyenne désirée, puis mélangées en présence d'agents de frittage, de défloculants et/ou liants utilisés classiquement, par exemple de l'acide phosphorique.

Le mélange des matières premières pourrait éventuellement être atomisé avant de passer à l'étape a).

A l'étape b), le mélange a ensuite été mis en forme par pressage isostatique afin de former des pièces crues cylindriques de 200 mm de diamètre et d'environ 200 mm de hauteur.

A l'étape c), les pièces crues ont alors été frittées sous air, à pression atmosphérique et à une température de frittage de 1600°C avec 20h de maintien en palier.

Pour mesurer le niveau d'exsudation, des échantillons sous la forme de barreaux de produit de section carrée de 25 mm de côté et de 75 mm de hauteur ont été prélevés et soumis à un chauffage à 1700°C pendant 24 heures. A la fin de cette période, on mesure le volume de l'échantillon. On appelle "Vm" le volume de l'échantillon après le chauffage, "Vi" le volume de l'échantillon avant le chauffage, et "Va" (augmentation de volume) la différence entre ces deux volumes Va = Vm - Vi. On appelle "indice d'exsudation", noté "le" dans le tableau 1, le rapport Va/Vi.

Les proportions des matières premières utilisées (pourcentages massiques) ainsi que la porosité apparente (en %), la densité et l'indice "le" des produits frittés obtenus, sont donnés dans le tableau 1.

**Tableau 1**

| | 1 | 2 | 3 | 4 | 5 | 6 (comparatif) | 7 (comparatif) |
|---|---|---|---|---|---|---|---|
| Zircon | 98,75 | 98,5 | 97 | 97,3 | 97,33 | 98,5 | 98,6 |
| ZnO | 0,25 | 0,5 | 2,5 | 2,5 | 2,5 | | |
| H₃PO₄ | | | | | 0,17 | | |
| Al₂O₃ | | | | | | 0,8 | 0,3 |
| Ta₂O₅ | 1 | 1 | 0,5 | | | | |
| GeO₂ | | | | 0,2 | | | |
| TiO₂ | | | | | | 0,7 | 1,1 |
| Porosité apparente | 4,14 | 4,71 | 0,12 | 0,79 | 1,23 | 0,29 | 0,25 |
| Densité apparente (g/cm³) | 4,11 | 4,10 | 4,31 | 4,28 | 4,28 | 4,32 | 4,39 |
| le | 3% | 6% | 3% | 5% | 3% | 12% | 9% |

Le tableau 1 montre clairement la très bonne résistance à l'exsudation des produits selon l'invention. La densité de ces produits reste équivalente à celle des produits connus testés. Les exemples 3-5 sont des exemples de référence. Ces produits sont donc bien adaptés pour être utilisés dans les fours de verrerie.

## Revendications

1. Produit fritté élaboré à partir d'une charge de départ contenant 75 à 99% de zircon, en pourcentage massique sur la base des oxydes et présentant la composition chimique pondérale moyenne, en pourcentages massiques sur la base des oxydes, suivante :
60% ≤ ZrO₂ ≤ 72,8%,
27% ≤ SiO₂ ≤ 36%,
0,1% ≤ B₂O₃ + GeO₂ + P₂O₅ + Sb₂O₃ + Nb₂O₅ + Ta₂O₅ + V₂O₅,
0,1% ≤ ZnO + PbO + CdO, avec ZnO < 2,5%,
B₂O₃ + GeO₂ + P₂O₅ + Sb₂O₃ + Nb₂O₅ + Ta₂O₅ + V₂O₅+ ZnO + PbO + CdO ≤ 5%
0% ≤ Al₂O₃+ TiO₂ + MgO + Fe₂O₃ + NiO + MnO₂ + CoO + CuO ≤ 5%,
autres oxydes : ≤ 1,5%,
pour un total de 100%.

2. Produit fritté selon la revendication précédente, dans lequel la teneur en Ta₂O₅ est supérieure à 0,3% et inférieure à 3%, en pourcentages en masse sur la base des oxydes.

3. Produit fritté selon l'une quelconque des revendications précédentes, dans lequel la teneur en Ta₂O₅ est supérieure à 0,8%, en pourcentage en masse sur la base des oxydes.

4. Produit fritté selon l'une quelconque des revendications précédentes, dans lequel la teneur en ZnO est supérieure à 0,3%, en pourcentages en masse sur la base des oxydes.

5. Produit fritté selon l'une quelconque des revendications précédentes, dans lequel la teneur en ZnO est supérieure à 0,8%, en pourcentage en masse sur la base des oxydes.

6. Produit fritté selon l'une quelconque des revendications précédentes, comportant plus de 0,05% d'au moins un oxyde parmi Al₂O₃, TiO₂, MgO, Fe₂O₃, NiO, MnO₂, CoO et CuO, en pourcentage en masse sur la base des oxydes.

7. Produit fritté selon l'une quelconque des revendications précédentes, comportant plus de 0,3% d'au moins deux oxydes parmi Al₂O₃, TiO₂, MgO, Fe₂O₃, NiO, MnO₂, CoO et CuO, en pourcentage en masse sur la base des oxydes.

8. Produit fritté selon l'une quelconque des revendications précédentes, présentant une composition chimique telle que 0,05% < Al₂O₃ + TiO₂ < 3%, en pourcentage en masse sur la base des oxydes.

9. Produit fritté selon l'une quelconque des revendications précédentes, présentant une composition chimique telle que 0,9% < Al₂O₃ + TiO₂, en pourcentage en masse sur la base des oxydes.

10. Produit fritté selon l'une quelconque des revendications précédentes, présentant une composition chimique pondérale moyenne, en pourcentages massiques sur la base des oxydes, telle que :
60% ≤ ZrO₂ ≤ 72,4%,
27% ≤ SiO₂ ≤ 36%,
0,2% ≤ B₂O₃ + Nb₂O₅ + Ta₂O₅ ≤ 2,5%,
0,2% ≤ ZnO ≤ 2,5%,
0,2% ≤ Al₂O₃ + TiO₂ + MgO + NiO + MnO₂ + CoO + CuO ≤ 3%,
autres oxydes : ≤ 1,5%,
pour un total de 100%.

11. Produit fritté selon l'une quelconque des revendications précédentes, présentant une composition chimique pondérale moyenne, en pourcentages massiques sur la base des oxydes, telle que :
60% ≤ ZrO₂ ≤ 72,4%,
27% ≤ SiO₂ ≤ 36%,
0,2% ≤ Nb₂O₅ + Ta₂O₅ ≤ 2,5%,
0,2% ≤ ZnO ≤ 2,5%,
0,2% ≤ Al₂O₃ + TiO₂ ≤ 2%,
autres oxydes : ≤ 1,5%,
pour un total de 100%.

12. Produit fritté selon l'une quelconque des revendications précédentes, dans lequel la teneur en « autres oxydes » est inférieure à 0,5%, en pourcentage en masse sur la base des oxydes.

13. Produit fritté selon l'une quelconque des revendications précédentes, dans lequel la teneur en oxyde d'yttrium Y₂O₃ est inférieure à 0,5%, en pourcentage en masse sur la base des oxydes.

14. Produit fritté selon l'une quelconque des revendications précédentes, dans lequel la teneur en zircone est supérieure à 5%, en pourcentage massique sur la base des oxydes.

15. Utilisation d'un produit selon l'une quelconque des revendications précédentes, dans une zone d'un four de verrerie où ledit produit est en contact avec du verre fondu.

16. Utilisation selon la revendication précédente, pour augmenter la résistance à l'exsudation.

## Patentansprüche

1. Gesintertes Produkt hergestellt aus einer Ausgangscharge, die 75 bis 99% Zirkon enthält und zwar in Massenprozenten auf der Basis von Oxyden und eine mittlere chemische Gewichtszusammensetzung in Massenprozenten auf der Basis von Oxyden wie folgt aufweist:
60% ≤ ZrO₂≤ 72,8%,
27% ≤ SiO₂≤ 36%,
0,1% ≤ B₂O₃+GeO₂+P₂O₅+Sb₂O₃+Nb₂O₅+Ta₂O₅+V₂O₅,
0,1% ≤ ZnO+PbO+CdO, mit ZnO < 2,5%,
B₂O₃+GeO₂+P₂O₅+Sb₂O₃+Nb₂O₅+Ta₂O₅+V₂O₅+ ZnO+PbO+CdO ≤ 5%
0% ≤ Al₂O₃+TiO₂+MgO+Fe₂O₃+NiO+MnO₂+CoO+CuO ≤ 5%,
andere Oxyde: ≤ 1,5%,
bei einer Gesamtheit von 100%.

2. Gesintertes Produkt nach dem vorhergehenden Anspruch, in welchem der Gehalt an Ta₂O₅ größer als 0,3% und kleiner als 3% in Massenprozenten auf der Basis von Oxyden ist.

3. Gesintertes Produkt nach einem der vorhergehenden Ansprüche, in welchem der Gehalt an Ta₂O₅ größer als 0,8% in Massenprozent auf der Basis von Oxyden ist.

4. Gesintertes Produkt nach einem der vorhergehenden Ansprüche, in welchem der Gehalt an ZnO größer als 0,3% in Massenprozenten auf der Basis von Oxyden ist.

5. Gesintertes Produkt nach einem der vorhergehenden Ansprüche, in welchem der Gehalt an ZnO größer als 0,8% in Massenprozent auf der Basis von Oxyden ist.

6. Gesintertes Produkt nach einem der vorhergehenden Ansprüche, enthaltend mehr als 0,05% aus mindestens einem der Oxyde Al₂O₃, TiO₂, MgO, Fe₂O₃, NiO, MnO₂, CoO und CuO in Massenprozent auf der Basis von Oxyden.

7. Gesintertes Produkt nach einem der vorhergehenden Ansprüche, enthaltend mehr als 0,3% von wenigstens zwei Oxyden aus Al₂O₃, TiO₂, MgO, Fe₂O₃, NiO, MnO₂, CoO und CuO in Massenprozent auf der Basis von Oxyden.

8. Gesintertes Produkt nach einem der vorhergehenden Ansprüche, welches eine chemische Zusammensetzung wie 0,05% < Al₂O₃+TiO₂ < 3% in Massenprozenten auf der Basis von Oxyden aufweist.

9. Gesintertes Produkt nach einem der vorhergehenden Ansprüche, welches eine chemische Zusammensetzung wie 0,9% < Al₂O₃+TiO₂ in Massenprozent auf der Basis von Oxyden aufweist.

10. Gesintertes Produkt nach einem der vorhergehenden Ansprüche, welches eine mittlere chemische Gewichtszusammensetzung in Massenprozent auf der Basis von Oxyden wie folgt aufweist:
60% ≤ ZrO₂≤ 72,4%,
27% ≤ SiO₂≤ 36%,
0,2% ≤ B₂O₃+Nb₂O₅+Ta₂O₅ ≤ 2,5%,
0,2% ≤ ZnO ≤ 2,5%,
0,2% ≤ Al₂O₃+TiO₂+MgO+NiO+MnO₂+CoO+CuO ≤ 3%,
andere Oxyde: ≤ 1,5%,
bei einer Gesamtheit von 100%.

11. Gesintertes Produkt nach einem der vorhergehenden Ansprüche, welches eine mittlere chemische Gewichtszusammensetzung in Massenprozent auf der Basis von Oxyden wie folgt aufweist:
60% ≤ ZrO₂≤ 72,4%,
27% ≤ SiO₂≤ 36%,
0,2% ≤ Nb₂O₅+Ta₂O₅ ≤ 2,5%,
0,2% ≤ ZnO ≤ 2,5%,
0,2% ≤ Al₂O₃+TiO₂ ≤ 2%,
andere Oxyde: ≤ 1,5%,
bei einer Gesamtheit von 100%.

12. Gesintertes Produkt nach einem der vorhergehenden Ansprüche, in welchem der Gehalt an "anderen Oxyden" kleiner als 0,5% in Massenprozent auf der Basis von Oxyden ist.

13. Gesintertes Produkt nach einem der vorhergehenden Ansprüche, in welchem der Gehalt an Yttrium-Oxyd Y₂O₃ kleiner als 0,5% in Massenprozent auf der Basis von Oxyden ist.

14. Gesintertes Produkt nach einem der vorhergehenden Ansprüche, in welchem der Gehalt an Zirkon-Oxyd größer als 5% in Massenprozent auf der Basis von Oxyden ist.

15. Verwendung eines Produkts nach einem der vorhergehenden Ansprüche in einer Zone eines Glasschmelzofens, wo das Produkt in Kontakt mit dem geschmolzenen Glas ist.

16. Verwendung nach dem vorhergehenden Anspruch zur Erhöhung des Exsudations-Widerstands.

## Claims

1. A sintered product elaborated from a starting charge containing 75-99% of zircon, in mass percentage based on the oxides, and having the following average weight chemical composition in mass percentages based on the oxides:
60% ≤ ZrO₂ ≤ 72.8%,
27% ≤ SiO₂ ≤ 36%,
0.1% ≤ B₂O₃ + GeO₂ + P₂O₅ + Sb₂O₃ + Nb₂O₅ + Ta₂O₅ + V₂O₅,
0.1% ≤ ZnO + PbO + CdO, with ZnO < 2.5%,
B₂O₃ + GeO₂ + P₂O₅ + Sb₂O₃ + Nb₂O₅ + Ta₂O₅ + V₂O₅+ ZnO + PbO + CdO ≤ 5%
0% ≤ Al₂O₃ + TiO₂ + MgO + Fe₂O₃ + NiO + MnO₂ + CoO + CuO ≤ 5%,
other oxides: ≤ 1.5%,
for a total of 100%.

2. The sintered product according to the preceding claim, wherein the Ta₂O₅ content is larger than 0.3% and less than 3%, in mass percentages based on the oxides.

3. The sintered product according to any of the preceding claims, wherein the Ta₂O₅ content is larger than 0.8%, in mass percentage based on the oxides.

4. The sintered product according to any of the preceding claims, wherein the ZnO content is larger than 0.3% and less than 3%, in mass percentages based on the oxides.

5. The sintered product according to any of the preceding claims, wherein the ZnO content is larger than 0.8%, in mass percentage based on the oxides.

6. The sintered product according to any of the preceding claims, including more than 0.05% of at least one oxide from Al₂O₃, TiO₂, MgO, Fe₂O₃, NiO, MnO₂, CoO and CuO, in mass percentage based on the oxides.

7. The sintered product according to any of the preceding claims, including more than 0.3% of at least two oxides from Al₂O₃, TiO₂, MgO, Fe₂O₃, NiO, MnO₂, CoO and CuO, in mass percentage based on the oxides.

8. The sintered product according to any of the preceding claims, having a chemical composition such that 0.05% < Al₂O₃ + TiO₂ < 3%, in mass percentage based on the oxides.

9. The sintered product according to any of the preceding claims, having a chemical composition such that 0.9% < Al₂O₃ + TiO₂, in mass percentage based on the oxides.

10. The sintered product according to any of the preceding claims, having an average weight chemical composition, in mass percentages based on the oxides, such that :
60% ≤ ZrO₂ ≤ 72.4%,
27% ≤ SiO₂ ≤ 36%,
0.2% ≤ B₂O₃ + Nb₂O₅ + Ta₂O₅ ≤ 2.5%,
0.2% ≤ ZnO ≤ 2.5%,
0.2% ≤ Al₂O₃ + TiO₂ + MgO + NiO + MnO₂ + CoO + CuO ≤ 3%,
other oxides: ≤ 1.5%,
for a total of 100%.

11. The sintered product according to any of the preceding claims, having an average weight chemical composition in mass percentages based on the oxides, such that :
60% ≤ ZrO₂ ≤ 72.4%,
27% ≤ SiO₂ ≤ 36%,
0.2% ≤ Nb₂O₅ + Ta₂O₅ ≤ 2.5%,
0.2% ≤ ZnO ≤ 2.5%,
0.2% ≤ Al₂O₃ + TiO₂ ≤ 2%,
other oxides: ≤ 1.5%,
for a total of 100%.

12. The sintered product according to any of the preceding claims, wherein the content of « other oxides » is less than 0.5%, in mass percentage based on the oxides.

13. The sintered product according to any of the preceding claims, wherein the yttrium oxide Y₂O₃ content is less than 0.5%, in mass percentage based on the oxides.

14. The sintered product according to any of the preceding claims, wherein the zircon content is larger than 5%, in mass percent based on the oxides.

15. The use of a product according to any of the preceding claims in an area of a glass furnace where said product is in contact with molten glass.

16. The use according to the preceding claim, in order to improve the resistance to exudation.
